# EUROPEAN PATENT APPLICATION

(11) **EP 4 627 915 A1**
(43) Date of publication of application: **08.10.2025**
(21) Application number: 25164346.6
(22) Date of filing: 18.03.2025
(51) Int. Cl.: A01K 29/00

(54) **ANIMAL HUSBANDRY SYSTEM**

(30) Priority: 27.03.2024 NL 2037343
(71) Applicant: Lely Patent N.V., 3147 PB Maassluis (NL)
(72) Inventor: VAN ADRICHEM, Paulus Jacobus Maria, 3147 PB Maassluis (NL); NIJHOF, Wikke, 3147 PB Maassluis (NL); VAN DER SLUIS, Joram Robin, 3147 PB Maassluis (NL)
(74) Representative: Octrooibureau Van der Lely N.V.

(57) **Abstract**

Animal husbandry system, wherein a group of animals can move about freely in an area, the system comprising animal identification means with stored individual animal identity data for identifying the animals at an identification location, wherein the system further comprises tracking means configured for repeatedly tracking the position of individual animals from an identification location onwards and in doing so assigning to the individual animals a track comprising tracking position data and tracking identity data, wherein the system is configured to automatically reidentify an animal after a tracking error by detection and analysis of the animal by means of the tracking means and comparison of features of the animal with the stored individual animal identity data. The animals can be tracked efficiently and identified accurately in a cheap and simple manner.

## Description

The present invention relates to an animal husbandry system, wherein a group of animals can move about freely in an area intended therefor, the system comprising animal identification means with a set of stored individual animal identity data for identifying the animals at at least one identification location, wherein the system further comprises tracking means configured for repeatedly tracking the position of individual animals from an identification location onwards and in doing so assigning to the individual animals a track comprising tracking position data and tracking identity data.

Such systems are known in the art. Monitoring the animals in the system and gathering relevant animal data plays an important role in modern animal husbandry systems. Being able to correctly identify animals within the group is of paramount importance.

EP4187505 discloses a method and system for the identification of animals with the aid of video data, extracting a set of parameters from the data by processing sets of identified reference points in the data with a trained neural network, generating an identification vector from the set of parameters, determining a list of matching scores by comparing the identification vector with a selection of known identification vectors corresponding to a unique registered animal, and identifying one animal as that unique registered animal in case a matching score exceeds a threshold. There is no specific identification location. This is a rather complex method and system, which is not even successful when there is no suitable matching score.

WO2021/032890 deals with a method and apparatus for identifying an animal in a herd by capturing an image of at least a part of the animal and comparing the image or a feature vector computed from the image with stored reference values and detecting a best match. The system is suitable for rotary milking platforms, in which the animals have a more or less fixed position relative to their stall. There are no tracking means.

WO2018/174812 describes a video monitoring system for identifying an individual animal in a group of animals each carrying an identification tag. An event of interest related to the individual animal is detected, after which the animal in question is tracked and its identity is determined by means of the identification tag as soon as it visits an identification station. Multiple animals may be tracked at the same time, when multiple events of interest have been detected. Not all individual animals are tracked all the time.

WO2022/260576 shows a positioning system in which mobile units transmit radio messages containing identity information via ultra-wideband (UWB) to a number of fixed base stations which determine the position of each mobile unit. Traces of the mobile units are registered. If a sufficiently large number of traces is being interrupted in a certain area in a certain time interval, the base station configuration is adapted.

There is a need for an improved, yet economical and simple animal husbandry system.

It is an object of the present invention to provide such an improved system.

The invention achieves the object at least in part by means of a system according to claim 1, in particular an animal husbandry system, wherein a group of animals can move about freely in an area intended therefor, the system comprising animal identification means with a set of stored individual animal identity data for identifying the animals at at least one identification location, wherein the system further comprises tracking means configured for repeatedly tracking the position of individual animals from an identification location onwards and in doing so assigning to the individual animals a track comprising tracking position data and tracking identity data, wherein the system is configured to automatically reidentify an animal after a tracking error by detection and analysis of the animal by means of the tracking means and comparison of features of the animal with the set of stored individual animal identity data.

In this way, the animals in the husbandry system can be tracked efficiently and accurately in a relatively cheap and simple manner without being incommoded. Thus, a user-friendly, animal-friendly, economical and reliable animal husbandry system is realized, in which the animals are correctly identified.

The invention is based on the insight that in case of a tracking error, an animal can be reidentified with the aid of the tracking means in an efficient way. This can be achieved in a both user-friendly and animal-friendly, automated manner.

Suitable and advantageous embodiments are described in the dependent claims, as well as in the description below.

According to a first embodiment of the invention, the system is configured to limit the set of stored individual animal identity data used for the comparison by eliminating animal identity data corresponding to animals for which recently no tracking error has occurred. In this way, the efficiency of the system is further enhanced.

In accordance with a further embodiment, the system is configured to limit the set of stored individual animal identity data used for the comparison by eliminating animal identity data corresponding to animals which were not in the vicinity of the position where the tracking error for the animal in question has occurred. Thus, the computational efficiency of the system is even further improved in a simple way.

In a further embodiment, in which the system is provided with a herd management system containing data relating to the animals' identity, location, condition and/or activity, the system is configured to limit the set of stored individual animal identity data used for the comparison by eliminating animal identity data corresponding to animals based upon information from the herd management system with respect to their location and/or condition and/or activity. Making use of data from the herd management system enables a further enhancement of the efficiency of the system.

Preferably, the tracking means comprise at least one camera, a processor or a computer processing unit, and image analysis means. This constitutes a very animal-friendly implementation, as the animals are not disturbed in any way. As it is automated, it is also a very user-friendly implementation.

In accordance with another embodiment, the tracking means comprise tags wearable by the animals configured for repeatedly transmitting messages containing identity information of the animal in question to a number of base stations, which are configured for determining the animal's position therefrom. Preferably, the messages are radio messages transmitted using ultra-wideband (UWB). This embodiment also gives good results.

Advantageously, the identification means comprise a tag wearable by each animal and at least one tag reader. This is a very simple and relatively cheap, yet effective implementation.

Alternatively or additionally, the identification means comprise a camera with image analysis means. The animals can be recognized at the at least one identification location from their size, body shape, skin pattern, etcetera, in a manner known as such.

In a further embodiment, the identification location is situated inside, at or near a milking robot, a feeding/drinking station, a selection gate and/or a detection gate. These are suitable locations for the identification action, because there the animal in question stands still for a while.

The invention will now be further explained with reference to the following Figure, which schematically illustrates the system according to the invention.

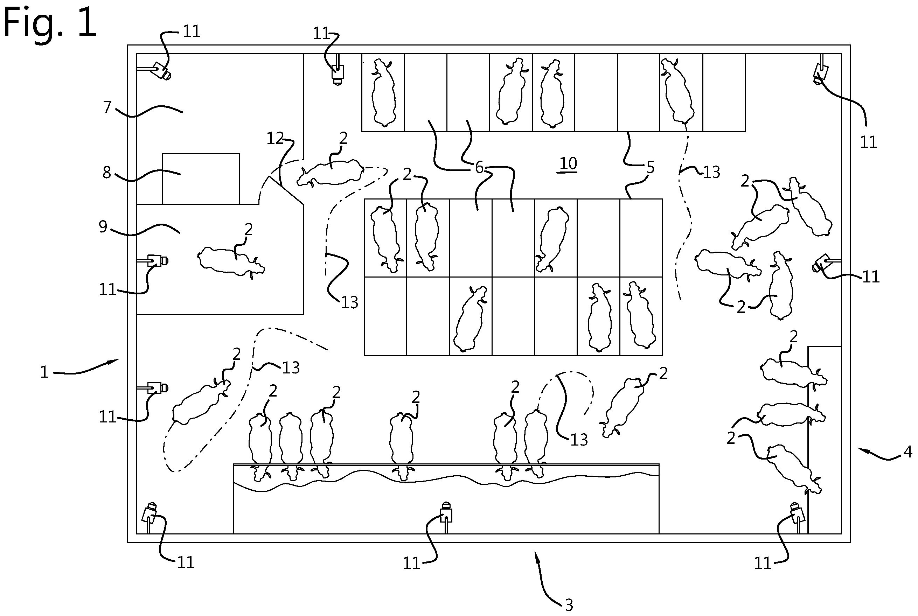

Figure 1 shows an area with an animal husbandry system according to the invention.

In Figure 1 an animal husbandry system with an area here in the form of a stable or shed or barn 1 wherein a group of animals 2 can move about freely is shown. In the example shown the animals are cows. Of course, the invention can also be applied to an animal husbandry system involving other animals, such as goats, pigs, horses, or even chickens, turkeys, etcetera. The stable 1 can also be a structure with, for example, a partly open roof. The system according to the invention can be applied in a free stall barn or in an open area like a meadow or pasture with cattle fences. It can also be applied in a combination of a stall and a pasture.

In the example shown, the stable 1 has a number of activity areas for the animals 2: a feeding area 3, a drinking area 4, at least one resting area 5 with cubicles 6, a milking area 7 with a milking robot 8, and a treatment area 9. All these areas are interconnected by one or more alleys 10.

Monitoring and analyzing means configured for determining and tracking the identity and the position of each individual animal 2 are provided, in the embodiment shown in the form of a number of cameras 11 and a processor with appropriate software, as will be elucidated below.

The cameras 11 are arranged for monitoring a region or a subarea or a number of subareas of the stable 1. Of course, other (optical) sensors can in principle be used instead of the cameras 11, or additionally. The cameras 11 are provided in such a way that, collectively, they are configured for monitoring substantially the complete shed 1, particularly all the animals 2. The cameras 11 can be provided in the shed 1 above the animals 2 (e.g. centrally, theoretically only one camera can be used), or as shown in Figure 1, on the walls of the shed 1.

The cameras 11 can be fixedly positioned and oriented in such a way that all relevant subareas of the area 1 can be monitored. Alternatively, they may be mounted in a pivotable way. The subareas may overlap. In case the invention is used in a pasture, the cameras 11 may be provided on fences, at a sufficient height above the ground. The chosen configuration obviously depends on the shape of the area or shed 1.

Suitable illumination means (not shown) for the shed 1 are also provided.

Animal identification means are provided configured for establishing the identity of each individual animal 2 at one or more identification locations. To that end, the animal identification means comprise a set of stored individual animal identity data. These separate identification means can be in the form of a tag in which animal identity data are stored, wearable by each animal 2, which tag can be read by at least one tag reader, provided in at least one identification location, for example in the milking robot 8, at the feeding area 3, at the drinking area 4, and/or on a vehicle which is moveable in the area 1, e.g. a cleaning vehicle (not shown). For example, Radio Frequency Identification, known as such, with tags/transponders and an antenna with a reader can be used. The tags may also be read by means of the cameras 11 or with an extra camera. This is a simple and relatively cheap implementation.

The identification location can be situated inside, at or near the milking robot 8, or inside, at or near a feeding/drinking station 3, 4, or inside, at or near a selection gate 12 and/or a detection gate (not shown). These are suitable locations for the identification action, because there the animal 2 in question stands still for a while. One identification location is sufficient, although in theory more than one location can be used.

The cameras 11 are connected to a processor or a computer processing unit, and image analysis means (known as such, not shown). With the aid of the cameras 11, the processor and the image analysis means, the animals 2 can be tracked at least temporarily in the shed 1 as soon as they leave an identification location.

In an alternative embodiment, the identification means are also formed by the cameras 11, the processor and the image analysis means, so that it is not necessary for the animals 2 to wear tags. In that case, the cameras 11, the processor and the image analysis means form identification means configured for determining the identity of each individual animal 2 and detection and tracking means configured for detecting and tracking the position of each individual animal 2. An extra identification camera may be used in this case at an identification location, for example in the milking robot 8. The animals 2 can be recognized at such a suitable location from their size, body shape, skin pattern, etcetera, in a manner known as such.

Once an animal 2 has been identified at an identification location, the cameras 11 and the computer with image analysis means are configured to track the position of the animal 2 when it moves through the area 1, ideally until a next visit of the animal 2 in an identification location. However, when an animal 2 moves through the area 1, a tracking error can occur. The animals 2 are moving about freely, so that after a certain time the tracking may be interrupted, for example if a cow 2 hides behind another cow 2, or if a cow 2 is only partly visible for the cameras 11, or if two cows 2 remain in close contact with each other for a while.

The tracking means assign to the individual animals 2 a track, schematically illustrated in Figure 1 with reference numeral 13. Here, the term "track" is understood to designate a movement pattern represented by consecutively updates of the animal's position. Of course, in practice the tracks can be much longer than shown in the Figure. A track 13 comprises tracking identity data and tracking position data from a moment of detection of an animal 2 in an identification location until a tracking error occurs and the tracking means lose track of the animal 2 in question. At a later moment, a new track 13 will be assigned to the animal 2, as soon as it is detected again. In Figure 1, the tracks 13 are only schematically illustrated for clarity and simplicity: each track 13 starts at an identification location, such as the milking robot 8.

In accordance with the invention, the system is configured to automatically reidentify an animal 2 after a tracking error by detection and analysis of the animal by means of the tracking means 11 and comparison of features of the animal 2 with the set of stored individual animal identity data. In case of a tracking error, an animal 2 can be reidentified with the aid of the tracking means 11 in an efficient way. This can be achieved in a both user-friendly and animal-friendly, automated manner.

The system may be configured to limit the set of stored individual animal identity data used for the comparison by eliminating animal identity data corresponding to animals 2 for which recently no tracking error has occurred. For example, a list of animals 2 for which the identity is fairly certain can be kept. These animals 2 can be eliminated for the reidentification. This enhances the efficiency of the system.

Advantageously, the system is also configured to limit the set of stored individual animal identity data used for the comparison by eliminating animal identity data corresponding to animals 2 which were not in the vicinity of the position where the tracking error for the animal in question has occurred. These animals 2 are not likely candidates for the reidentification. Thus, the computational efficiency of the system is further improved in a simple way.

In case the system is provided with a herd management system containing data relating to the animals' identity, location, condition and/or activity, the system is configured to limit the set of stored individual animal identity data used for the comparison by eliminating animal identity data corresponding to animals 2 based upon information from the herd management system with respect to their location and/or condition and/or activity. Making use of data from the herd management system enables a further enhancement of the efficiency of the system.

For example, if there are different groups of cows, the reidentification can be limited to the relevant group, as registered in the herd management system. Or, in case a cow is separated in a space without an identification location, the system can e.g. detect that this cow is calving, so that a reidentification is facilitated by looking up in the herd management system which cows are eligible for calving. The reidentification may be further facilitated and rendered more accurate by combining this information with other features as detected by the tracking means 11.

As the tracking means comprise at least one camera 11, a processor or a computer processing unit, and image analysis means, this constitutes a very animal-friendly implementation, because the animals 2 are not disturbed in any way. As it is automated, it is also a very user-friendly implementation.

In an alternative embodiment, the tracking means comprise tags wearable by the animals 2 configured for repeatedly transmitting messages containing identity information of the animal 2 in question to a number of base stations (not shown), which are configured for determining the animal's position therefrom. Preferably, the messages are radio messages transmitted using ultra-wideband (UWB). This alternative embodiment also gives good results, although it is susceptible to interference problems. In accordance with the invention, reidentification of an animal may take place by resending messages and comparing the sent identity information with stored animal identity data until a match occurs. Alternatively, an extra camera may be added to the system for reidentification purposes.

In case a tracking error would not be noticed, the identification means provide a periodical ascertainment of the correct animal identity for the animal tracking means 11 at an identification location by comparing and matching the stored individual animal identity data with the tracking identity data assigned by the tracking means 11. In this way, a periodical matching with the correct animal identity as stored in the identification means is achieved.

The system further comprises (optionally) a treatment area 9 and a selection gate 12 for guiding an animal 2 to the treatment area 9. This is useful and user-friendly for the farmer, and animal health and welfare is improved.

Thus, a highly efficient and accurate, automated, yet animal-friendly animal husbandry system is realized.

### REFERENCE NUMERAL LIST

- 1: Stable
- 2: Animal
- 3: Feeding Area
- 4: Drinking Area
- 5: Resting Area
- 6: Cubicle
- 7: Milking Area
- 8: Milking Robot
- 9: Treatment Area
- 10: Alley
- 11: Camera
- 12: Selection Gate
- 13: Track

## Claims

1. An animal husbandry system, wherein a group of animals (2) can move about freely in an area (1) intended therefor, the system comprising animal identification means with a set of stored individual animal identity data for identifying the animals (2) at at least one identification location (8, 3, 4, 12), wherein the system further comprises tracking means (11) configured for repeatedly tracking the position of individual animals (2) from an identification location (8, 3, 4, 12) onwards and in doing so assigning to the individual animals (2) a track (13) comprising tracking position data and tracking identity data, wherein the system is configured to automatically reidentify an animal (2) after a tracking error by detection and analysis of the animal (2) by means of the tracking means (11) and comparison of features of the animal (2) with the set of stored individual animal identity data.

2. System according to claim 1, wherein the system is configured to limit the set of stored individual animal identity data used for the comparison by eliminating animal identity data corresponding to animals (2) for which recently no tracking error has occurred.

3. System according to any one of claims 1 - 2, wherein the system is configured to limit the set of stored individual animal identity data used for the comparison by eliminating animal identity data corresponding to animals (2) which were not in the vicinity of the position where the tracking error for the animal in question has occurred.

4. System according to any one of claims 1 - 3, the system being provided with a herd management system containing data relating to the animals' identity, location, condition and/or activity, wherein the system is configured to limit the set of stored individual animal identity data used for the comparison by eliminating animal identity data corresponding to animals (2) based upon information from the herd management system with respect to their location and/or condition and/or activity.

5. System according to any one of claims 1 - 4, wherein the tracking means (11) comprise at least one camera, a processor or a computer processing unit, and image analysis means.

6. System according to any one of claims 1 - 5, wherein the tracking means comprise tags wearable by the animals (2) configured for repeatedly transmitting messages containing identity information of the animal (2) in question to a number of base stations, which are configured for determining the animal's position therefrom.

7. System according to claim 6, wherein the messages are radio messages transmitted using ultra-wideband (UWB).

8. System according to any one of claims 1 - 7, wherein the identification means comprise a tag wearable by each animal (2) and at least one tag reader.

9. System according to any one of claims 1 - 8, wherein the identification means comprise a camera with image analysis means.

10. System according to any one of claims 1 - 9, wherein the identification location is situated inside, at or near a milking robot (8), a feeding/drinking station (3, 4), a selection gate (12) and/or a detection gate.
